# EUROPÄISCHE PATENTSCHRIFT

(11) **EP 0 379 902 B1**
(45) Veröffentlichungstag und Bekanntmachung des Hinweises auf die Patenterteilung: **07.09.1994**
(21) Anmeldenummer: 90100536.3
(22) Anmeldetag: 11.01.1990
(51) Int. Cl.: H04B 3/54, H04L 12/10

(54) **Induktiv anzukoppelnde Nachrichtenaufbereitungseinrichtung**
Inductively coupled data-processing apparatus
Dispositif de traitement d'informations à couplage inductif

(30) Priorität: 27.01.1989 EP 89101453
(43) Veröffentlichungstag der Anmeldung: 01.08.1990
(73) Patentinhaber: SIEMENS AKTIENGESELLSCHAFT, 80333 München (DE)
(72) Erfinder: Zierhut, Hermann, Dipl.-Ing., D-8000 München 83 (DE)

(56) Entgegenhaltungen:
- DE-A- 3 043 059
- DE-B- 2 113 931

## Beschreibung

Die Erfindung bezieht sich auf eine induktiv anzukoppelnde Nachrichtenaufbereitungseinrichtung, die mit einem Wandler arbeitet, der als Weiche für Gleichstromenergie- und für Wechselspannungsinformationsübertragung dient, im einzelnen nach Gattungsbegriff von Patentanspruch 1. Er weist zumindest eine Spule auf der Energie bereitstellenden Seite auf, zu der ein Kondensator in Serie geschaltet ist, an dessen Anschlüssen Gleichspannung für die Energieversorgung bereitgestellt wird. Eine derartige Einrichtung ist als Anordnung mit einem binäre Signale liefernden Sender und einem über Leitungen mit diesem verbundenen Empfänger bekannt (DE-A-2 113 931). Bei dieser Anordnung wird jeweils ein Sender über Leitungen mit einem Empfänger verbunden, wobei mehrere Sender sternförmig an einer zentralen Empfangsstation jeweils mittels eines Zweileiternetzes angeschlossen sind. Dieses Netz führt auch Gleichstrom zur Versorgung des Bordnetzes der jeweiligen Sendestation zu. Als Weiche für Energie und Nachrichten wird jeweils am Anfang und Ende der Übertragungsleitung ein Übertrager verwendet, wobei Übertragerspulen in Reihe in der Übertragungsleitung angeordnet sind. Ein Bus-System mit Zweileiter-Netz läßt sich hiernach nicht aufbauen.

Bus-Systeme sind in den verschiedenartigsten Ausführungen und mit den verschiedenartigsten Übertragungsphilosophien bekannt (vergleiche auch DE-A-3 631 477). Es können digitale Daten übertragen werden zum Messen oder Steuern oder es können Analogsignale übertragen werden. Bus-Systeme eignen sich auch zur Sprachübertragung. Aus gründen der Symmetrie können auf der Energie bereitstellenden Seite zwei Spulen vorgesehen werden.

Mit einem Bus in Verbindung stehende Stationen werden über Bus-Ankoppler angeschlossen. Außer datenverarbeitenden Stationen ist es bekannt, auch andere Stationen wie Sensoren, Installationsgeräte und motorisch angetriebene Geräte wie Jalousien zu betreiben. Das System kann zentral oder dezentral ausgeführt sein, wobei außer der Infomation, den Nachrichten, auch die Energie für die Bordnetze zuzuführen ist.

Außerdem sind Energieverbrauchern wie Motoren, Leuchten oder Heizgeräten auch die Verbraucherenergie zuzuführen.

Entscheidend für die Wirtschaftlichkeit eines Bus-Systems ist das Zusammenspiel zwischen Bus und Bus-Ankopplern, die Anzahl der erforderlichen Übertragungswege sowie ein Aufbau und ein Betrieb der Einrichtungen in wirtschaftlicher Weise.

Der Erfindung liegt die Aufgabe zugrunde, eine bustaugliche induktiv anzukoppelnde Nachrichtenaufbereitungseinrichtung zu entwickeln, die mit einem Wandler in besonders wirtschaftlicher Weise arbeitet.

Die Lösung der geschilderten Aufgabe erfolgt nach der Erfindung durch eine Nachrichtenaufbereitungseinrichtung nach Patentanspruch 1. Der Wandler kommt mit einer Spule auf der Information verarbeitenden Seite aus, wozu der Funktion nach vier Ventile angeordnet sind. Zwei der Ventile sind in einem Sendezweig parallel zum Speicherkondensator angeordnet, wobei die Spule auf der Information verarbeitenden Seite zwischen den zwei Ventilen eingeschaltet ist. Zwei der Ventile sind ebenfalls in einem zum Speicherkondensator parallelen Zweig angeordnet, wobei die Spule auf der Information verarbeitenden Seite zwischen diesen Ventilen liegt, die Spule ist jedoch gegenphasig zur Schaltungsanordnung im Sendezweig angeordnet.

Dadurch kann in der Spule auf der Information verarbeitenden Seite gespeicherte Energie zurückgewonnen und auf die andere Seite des Wandlers gebracht werden, wobei der Wandler umgangen wird. Der Wandler wird mit diesem Energietransport daher entlastet, so daß er kleiner oder wirtschaftlicher ausgeführt sein kann und sich der Arbeitspunkt günstiger legen läßt. Der Wandler kann deshalb auch kleiner und wirtschaftlicher ausgeführt werden, so daß die Nachrichtenaufbereitungseinrichtung insgesamt sich kleiner und wirtschaftlicher aufbauen läßt.

Nach dem allgemeinen Stand der Technik wäre im Grundsatz zum Senden und zum Rückgewinnen der Energie jeweils eine eigene Spule erforderlich. Bei der erfindungsgemäßen Ausführung kommt man dagegen mit einer Spule für beide Funktionen durch die besondere Beschaltung aus.

Nach einer Weiterbildung der Erfindung ist eines der Ventile im Sendezweig in Sendepausen für Empfangsbereitschaft leitend gesteuert, während das andere im sperrenden Zustand gehalten bleibt, und von dem Ende der Spule auf der Information verarbeitenden Seite, an dem das leitend gesteuerte Ventil nicht angeschlossen ist, wird das Empfangssignal abgenommen. Mit einer derartigen induktiv anzukoppelnde Nachrichtenaufbereitungseinrichtung mit einem Wandler wird die eine Spule für Senden und Energierückgewinnen auch zum Empfangen der Signale herangezogen. Üblicherweise wäre hierfür eine weitere eigene Spule bereitzustellen. Die erfindungsgemäße Einrichtung zum Senden und Empfangen von Signalen bei gleichzeitiger Energierückgewinnung aus der Spule kommt mit einer einzigen Spule aus. Eine derartige Nachrichtenaufbereitungseinrichtung eignet sich also zum Übertragen von Nachrichten und zur Übertragung von Energie auf einer gemeinsamen Leitung, also insbesondere für einen Zweileiter-Bus. Es kommen aber auch andere Übertragsungswege und Systeme infrage.

Die Erfindung soll nun anhand von in der Zeichnung grob schematisch wiedergegebenen Ausführungsbeispielen näher erläutert werden:

In FIG 1 ist für eine induktiv angekoppelte Nachrichtenaufbereitungseinrichtung eine Schaltungsanordnung zum Senden und für Energierückgewinnung veranschaulicht.
In FIG 2 ist die Schaltungsanordnung nach FIG 1 zum Empfangen von Signalen in Sendepausen weitergebildet.

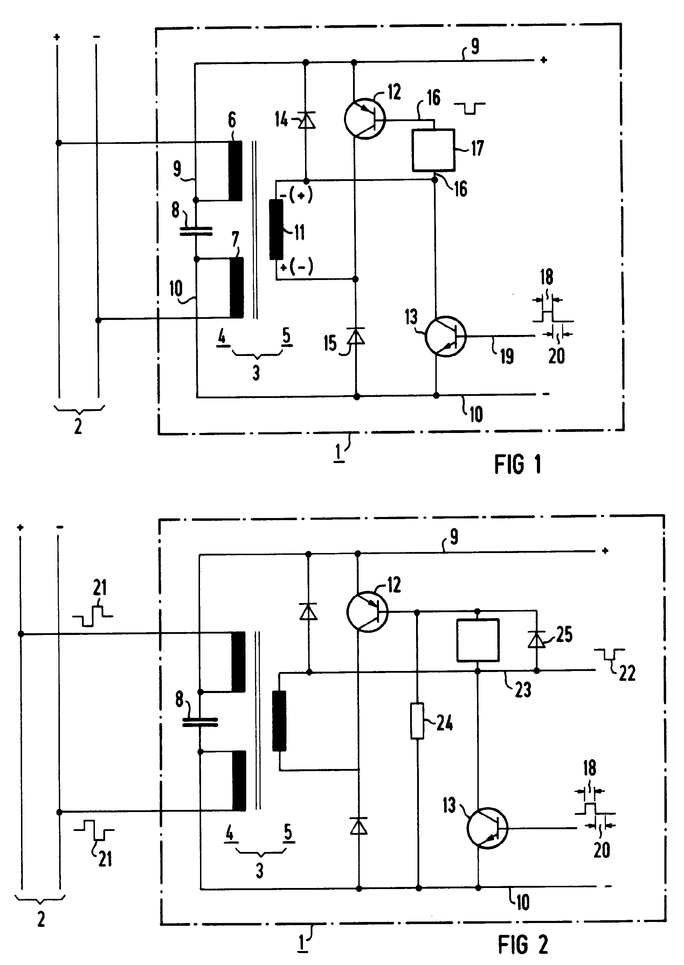

Die Nachrichtenaufbereitungseinrichtung 1 nach FIG 1 ist an eine Bus-Leitung 2 angeschlossen. Diese führt im Ausführungsbeispiel sowohl Gleichstrom zur Versorgung der Bordnetze der Station 1 und weitere parallel anzuschließender weiterer Nachrichtenaufbereitungseinrichtungen. Der Bus führt auch überlagerte Signale für den Nachrichtenverkehr. Die Nachrichtenaufbereitungseinrichtung arbeitet mit einem Wandler 3 als Weiche für Gleichstromenergieübertragung und für Wechselspannungsinformationsübertragung. Auf der Energie bereitstellenden Seite 4 des Wandlers sind aus Symmetriegründen zwei Wicklungen 6 und 7 angeordnet. Ein Kondensator 8 ist hierzu zwischen den Wicklungen in Serie eingeschaltet. Er bildet für Informationssignale einen leitenden Pfad. An den Anschlüssen 9 und 10 des Kondensators wird Gleichspannung für die Energieversorgung der Nachrichtenaufbereitungseinrichtung 1 bereitgestellt. Der Wandler 3 kommt mit einer Wicklung 11 auf der Information verarbeitenden Seite 5 aus. Hierzu sind der Funktion nach vier Ventile 12, 13, 14, 15 angeordnet. Zwei Ventile 12, 13 sind in einem Sendezweig parallel zum Kondensator 8 so angeordnet, daß die Wicklung 11 auf der Information verarbeitenden Seite 5 des Wandlers zwischen diesen Ventilen eingeschaltet ist. Zwei Ventile 14, 15 sind in einem weiteren zum Speicherkondensator parallelen Zweig angeordnet, in dem die Wicklung 11 auf der Information verarbeitenden Seite liegt. Die Wicklung ist zwischen diesen Ventilen angeordnet. Wesentlich ist, daß die Spule 11 durch diese Ventile 14 und 15 bezogen auf die Ventile 12 und 13 im Sendezweig gegenphasig eingeschaltet ist.

Wenn der Kondensator aufgrund seiner Bemessung oder Ausführung als Speicherkondensator wirkt, können kurzzeitige externe Spannungsausfälle überbrückt werden.

Von einem Steueranschluß des Ventils 12 führt eine Verbindungsleitung 16 über einen Koppelzweipol 17 zum Sendezweig mit den Ventilen 12 und 13 geführt. Der Koppelzweipol kann ein ohmscher Widerstand oder ein RC-Glied sein. Er sorgt zum Bereitstellen eines negativen Steuerpotentials am Ventil 12, das als pnp-Transistor ausgeführt ist, wenn am Ventil 13, das als npn-Transistor ausgeführt ist, ein positives Sendesignal ansteht, wodurch beide Ventile 12 und 13 leitend gesteuert werden.

Wenn ein positives Sendesignal 18 an der Sendesteuerleitung 19 ansteht wird das Ventil 13 leitend gesteuert, so daß negatives Potential zur Steuerelektrode des Ventils 12 gelangt, wodurch ein positiver Stromfluß vom Kondensator 8 über die Anschlußleitung 9, das Ventil 12, die Wicklung 11 des Wandlers auf der Information verarbeitenden Seite 5, über das Ventil 13 und die Anschlußleitung 10 zurück zur negativen Potentialseite des Kondensators 8 zustandekommt. Die Wicklung 11 liegt hierbei anhand der Zeichnung orientiert unten an Plusspannung und oben an Minusspannung. In der Sendepause 20 erfolgt eine Energierückgewinnung:

Infolge der elektromagnetischen Trägheit der Wicklung 11 und ihrer Umpolarisierung am Ende des Sendesignals 18 steht anhand der Zeichnung orientiert an der Wicklung 11 oben ein relativ hohes positives Potental und unten ein entsprechend negatives Potential an. Zur Energierückgewinnung am Ende des Sendesignals 18 erfolgt dann ein positiver Stromfluß über das als Diode ausgeführte Ventil 14 über den Anschluß 9 des Speicherkondensators zum Speicherkondensator 8 und über den Anschluß 10 des Speicherkondensators und über das als Diode ausgeführte Ventil 15 zurück zur Wicklung 11 des Wandlers 3. Hierdurch wird Energie am Wandler vorbei zum Speicherkondensator 8 zurückgeführt, die über die Anschlüsse 9 und 10 zur Energieversorgung der Nachrichtenaufbereitungseinrichtung 1 wieder zur Verfügung steht.

Die Nachrichtenaufbereitungseinrichtung 1 kann nach FIG 2 auch noch so weitergebildet sein, daß mit der einen Wicklung 11 des Wandlers auf der Information verarbeitenden Seite vom Bus 2 ankommende Empfangssignale 21, die als symmetrische Wechselspannungssignale im Ausführungsbeispiel veranschaulicht sind, ausgewertet werden können. Hierzu ist eines der Ventile 12, 13 im Sendezweig in Sendepausen 20 für Empfangsbereitschaft leitend gesteuert, während das andere Ventil im sperrenden Zustand bleibt. Im Ausführungsbeispiel wird das Ventil 12 zum Empfangen leitend gesteuert, während das Ventil 13 in Sendepausen 20 gesperrt bleibt. Das Empfangssignal 22 in der Nachrichtenaufbereitungseinrichtung 1 wird an dem Ende der Wicklung auf der Information verarbeitenden Seite 5 des Wandlers 3 über die Empfgangsleitung 23 abgenommen, an dem das leitend gesteuerte Ventil 12 nicht angeschlossen ist.

Um das Ventil 12 in Sendepausen 20 für Empfangsbereitschaft leitend zu steuern, wird über einen Widerstand 24, der andererseits mit dem Anschluß 10 verbunden ist, von dort negative Steuerspannung für den pnp-Transistor, das Ventil 12, angelegt. Die Empfangsleitung 23 ist weiter über eine Diode mit der Steuerelektrode des Ventils 12 so orientiert verbunden, daß das relativ hohe positive Potential am oberen Anschluß der Wicklung 11 in der Phase für Energierückgewinnung der Steuerelektrode zugeführt wird und das Ventil 12 sicher sperrt. Die Empfangssignale 21 vom Bus führen auf der Sekundärseite des Wandlers 3 an der Empfangsleitung 23 im Ausführungsbeispiel zu einem negativen Empfangssignal 22 in der Nachrichtenaufbereitungseinrichtung.

Dadurch ist man in der Lage, bei einem Bus, der Energie und Nachricht über eine Leitung überträgt, mit einer Wicklung auf der Information verarbeitenden Seite eines Wandlers Sendesignale auszuwerten, Energierückgewinnung durchzuführen und Empfangssignale zu verarbeiten.

## Patentansprüche

1. Induktiv anzukoppelnde Nachrichtenaufbereitungseinrichtung (1), die mit einem Wandler (3) arbeitet, der als Weiche für Gleichstromenergie- und für Wechselspannungsinformations-übertragung dient,
der zumindest eine Wicklung (6; 7) auf der Energie bereitstellenden Seite (4) aufweist, zu der ein Kondensator (8) in Serie geschaltet ist, an dessen Anschlüssen (9, 10) Gleichspannung für die Energieversorgung bereitgestellt wird,
wobei der Wandler (3) mit einer Wicklung (11) auf der Information verarbeitenden Seite (5) auskommt, **dadurch gekennzeichnet,** daß der Funktion nach
vier Ventile (12, 13, 14, 15) angeordnet sind, zwei (12, 13) in einem Sendezweig parallel zum Speicherkondensator (8), wobei die Wicklung (11) auf der Information verarbeitenden Seite (5) zwischen den zwei Ventilen (12, 13) eingeschaltet ist, zwei (14, 15) in einem zum Speicherkondensator parallelen Zweig, in dem die Wicklung (11) auf der Information verarbeitenden Seite zwischen den Ventilen (14, 15) gegenphasig eingeschaltet ist.

2. Induktiv anzukoppelnde Nachrichtenaufbereitungseinrichtung (1) mit einem Wandler (3) nach Patentanspruch 1, **dadurch gekennzeichnet,** daß eines der Ventile (12, 13: 12) im Sendezweig in Sendepausen (20) für Empfangsbereitschaft leitend gesteuert wird, während das andere (13) im sperrenden Zustand gehalten bleibt, und von dem Ende der Wicklung (11) auf der Information verarbeitenden Seite (5), an dem das leitend gesteuerte Ventil (12) nicht angeschlossen ist, das Empfangssignal (22) abgenommen wird.

## Claims

1. An information separation device (1) which is to be inductively coupled which operates with a transformer (3) which serves as separating filter for d.c. energy- and for a.c. voltage information transmission,
which comprises at least one winding (6; 7) on the side (4) on which energy is made available, which is connected in series with a capacitor (8), at the terminals (9, 10) of which d.c. voltage for the energy supply is made available,
wherein the transformer (3) comprises only one winding (11) on the information processing side (5),
characterised in that, in accordance with the function, four valves (12, 13, 14, 15) are provided, two (12, 13) in a transmitting arm parallel to the storage capacitor (8), where the winding (11) on the information processing side (5) is connected between the two valves (12, 13), two (14, 15) in an arm parallel to the storage capacitor in which the winding (11) on the information processing side is connected between the valves (14, 15) in phase opposition.

2. An information separation device (1) which is to be inductively coupled comprising a transformer (3) according to Claim 1, characterised in that one of the valves (12, 13; 12) in the transmitting arm is driven conductive for readiness to receive in transmission pauses (20), while the other valve (13) remains in the blocking state, and the received signal (22) is tapped from that end of the winding (11) on the information processing side (5) to which the conductively driven valve (12) is not connected.

## Revendications

1. Dispositif (1) de préparation d'informations à couplage inductif, qui opère par un transformateur (3) qui sert d'aiguillage pour la transmission d'informations relatives à une énergie en courant continu et à une tension alternative,
qui comporte, du côté (4) délivrant l'énergie, au moins un enroulement (6;7) avec lequel est branché en série un condensateur (8), aux bornes (9, 10) duquel est disponible une tension continue pour l'alimentation en énergie,
le transformateur (3) n'utilisant qu'un enroulement (11) du côté (5) traitant l'information,
caractérisé par le fait qu'il est prévu, pour le fonctionnement,
quatre valves (12, 13, 14, 15), dont deux (12, 13) sont dans une branche d'émission en parallèle avec le condensateur de mémorisation (8), l'enroulement (11) du côté (5) traitant les informations étant branché entre les deux valves (12, 13), tandis que deux valves (14, 15) sont dans une branche qui est montée en parallèle avec le condensateur de mémorisation et dans laquelle l'enroulement (11) du côté traitant l'information est branché en opposition de phase entre les valves (14, 15).

2. Dispositif (1) de préparation d'informations à couplage inductif, comportant un transformateur (3) selon la revendication 1, caractérisé en ce que l'une des valves (12, 13:12) de la branche d'émission est placée à l'état conducteur pendant des pauses d'émission (20) pour préparer la réception, tandis que l'autre valve (13) reste maintenue à l'état bloqué, et que le signal de réception (22) est reçu par l'extrémité de l'enroulement (11) du côté (5) traitant l'information, à laquelle n'est pas connectée la valve (12) placée à l'état conducteur.
